# EUROPEAN PATENT SPECIFICATION

(11) **EP 1 314 324 B1**
(45) Date of publication and mention of the grant of the patent: **27.08.2008**
(21) Application number: 00950411.9
(22) Date of filing: 18.07.2000
(51) Int. Cl.: H04Q 3/00, H04L 12/64

(54) **PROTOCOL TRANSLATION, ACCOUNTING AND ROUTING IN A GATEWAY**
PROTOKOLLUMSETZUNG, ABRECHNUNG UND LEITWEGLENKUNG IN EINER NETZÜBERTRAGUNGSVORRICHTUNG
TRADUCTION, COMPTAGE, ET ACHEMINEMENT DE MESSAGES DANS UNE PASSERELLE

(43) Date of publication of application: 28.05.2003
(73) Proprietor: Tekelec, Calabasas, CA 91302 (US)
(72) Inventor: TINSLEY, Robert, John, Reston, VA 20191 (US); MARSICO, Peter, J., Carrboro, NC 27510 (US); SPRAGUE, David, M., Raleigh, NC 27615 (US)
(74) Representative: Reinhard - Skuhra - Weise & Partner
(86) International application number: PCT/US2000/019515
(87) International publication number: WO 2002/007455

(56) References cited:
- WO-A-00/35155
- US-A- 5 852 660
- LAKSHMI-RATAN R A: "THE LUCENT TECHNOLOGIES SOFTSWITCH - REALIZING THE PROMISE OF CONVERGENCE" BELL LABS TECHNICAL JOURNAL, vol. 4, no. 2, April-June 1999, pages 174-195, XP000851517 ISSN: 1089-7089
- HAMDI M ET AL: "VOICE SERVICE INTERWORKING FOR PSTN AND IP NETWORKS" IEEE COMMUNICATIONS MAGAZINE, vol. 37, no. 5, May 1999 (1999-05), pages 104-111, XP000830888 ISSN: 0163-6804
- ZAHARYCHUK J ET AL: "GATEWAY SIGNAL TRANSFER POINTS: DESIGN, SERVICES AND BENEFITS" PROCEEDINGS OF ICC/SUPERCOM'90, vol. 1, 15 - 19 April 1990, pages 233-240, XP000147408

## Description

### Technical Field

The present invention relates to the routing of signaling messages in a multi-protocol communications networking environment, and more particularly to methods and systems for providing message accounting services at an internetwork routing node that is also capable of receiving, translating, and routing signaling messages that utilize a variety of communication protocols.

Lakshmi-Ratan R.A., "The Lucent Technologies Softswitch - Realizing the Promise of Convergence" Bell Labs Technical Journal, vol. 4, no. 2, April -June 1999, pages 174-195, XP000851517 ISSN: 1089-7089, discloses a soft switch that functions as a tandem or service switching point note which handles bearer channel traffic, such as voice traffic.

WO 00/35 155 A relates to methods and systems for communicating signalling system 7 (SS7) user part messages among SS7 notes and internet protocol (IP) notes.

US-A-5 852 660 discloses a network protocol conversion module within a telecommunications system. Signalling connection control part parameters within a signal generated within a first SS7 telecommunications network are converted into values and formates acceptable by a second SS7 telecommunications network by a converter residing within a gateway signal transfer point. Such a converter enables signals containing application layer data to be transported across two different SS7 telecommunications networks that are otherwise incompatible.

### Background Art

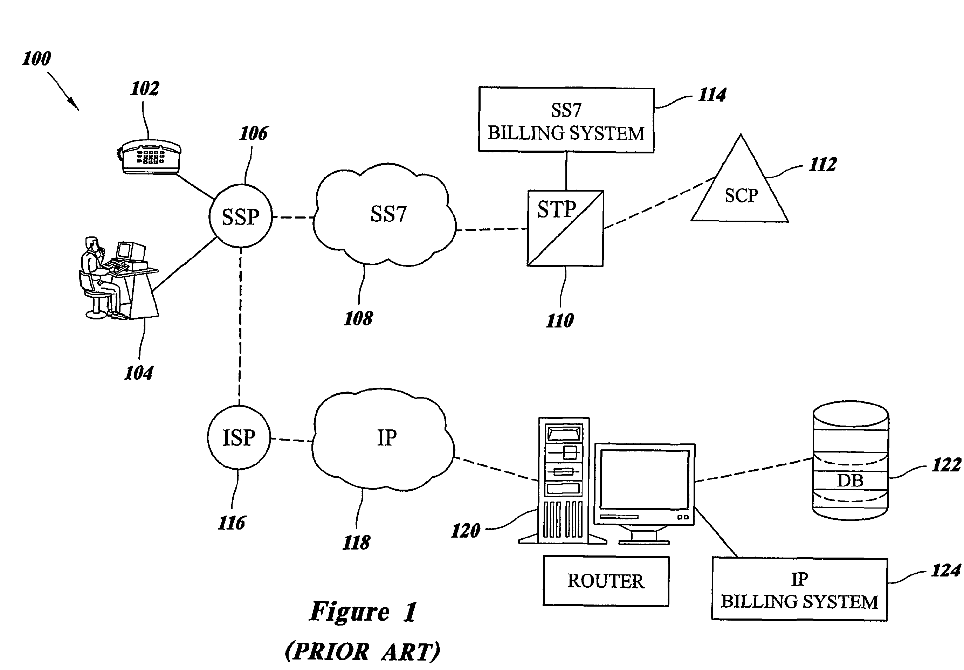

Shown in Figure **1** is a simplified communications network scenario that includes both a Signaling System 7 (SS7) and a Transmission Control Protocol / Internet Protocol (TCP/IP) communications network, generally indicated by the numeral **100.** Network **100** includes both a conventional voice type calling party **102** and a computer terminal based data type calling party **104.** Both calling parties are communicatively coupled to an originating End Office (EO) or Service Switching Point (SSP) **106.** With particular regard to signaling type communications, SSP **106** is generally connected via an SS7 network **108** to an SS7 signaling message routing node, Signal Transfer Point (STP) **110.** Coupled to STP **110** is an SS7 message accounting and billing system **114** which is used to track SS7 signaling query messages that are destined for an SS7 database node, Service Control Point (SCP) **112.** SCP node **112** might include an 800 number database, a Line Information Database (LIDS), Local Number Portability database (LNP), or other database services typically associated with the Public Switched Telephone Network (PSTN).

With particular regard to SS7 communication networks and the protocol stack typically employed therein, it will be appreciated that the overall stack can essentially be divided into two segments or layers: a lower level Message Transfer Part (MTP) layer and a higher level signaling application layer. In fact, the MTP layer, as described above, is comprised of three sub-levels that are identified as layers MTP1, MTP2 and MTP3. These three layers generally correspond to the physical, data link, and network levels as defined in the International Standards Organization (ISO) Open System Integration (OSI) protocol standard, and each layer can be configured to operate under one of many layer-specific protocols depending upon the particular network configuration scenario. For instance, the MTP1 layer protocol could be configured as DS0A, V.35, etc. Signaling application layer protocols commonly employed in an SS7 network include Transaction Capabilities Application Part (TCAP)/Signaling Connection Control Part (SCCP), ISDN User Part (ISUP), Telephone User Part (TUP), Mobile Application Part (MAP) and Broadband ISDN User Part (B/SUP). With respect to the OSI model mentioned above, these SS7 signaling application protocols essentially correspond to OSI layers 4 through 7, and in some cases a portion of the OSI layer 3. Such signaling application layer protocols are concerned primarily with facilitating call setup/teardown and various call related services (e.g., toll free service, local number portability, calling name delivery, etc.). In general, it will be appreciated that the lower level MTP layers are concerned with, and responsible for, ensuring reliable transport of a signaling message between applications residing on different SS7 network nodes.

In light of the previous discussion, it will be appreciated that within an SS7 signaling network, SS7 signaling protocol messages are typically transmitted over dedicated communication links that employ an MTP transport protocol suite.

Returning to Figure 1, it will be noted that further connected to SSP **106** is an Internet Service Provider (ISP) **116,** which is also communicatively coupled to an Internet Protocol communications network **118,** such as the Internet. As such, ISP **116** effectively provides a calling party that is served by SSP **106** with access to the Internet **118.** Connected to and generally contained within the Internet "cloud" **118** are a large number of data packet routers, one of which is shown in Figure 1 as router **120.** Further coupled to Internet data router **120** is a database node **122** and a billing system **124.** Database node **122** might include domain name information, presence or statues information, or any number of database applications utilized by Internet type service providers or e-commerce type operators. In a manner similar to that described above, billing system **124** is coupled to router **120** so as to generally track messages destined for Internet database node **122.**

With particular regard to IP-based communication networks and the protocol stack typically employed therein, in a manner analogous to that described above for SS7/MTP protocols, it will again be appreciated that the overall stack can essentially be divided into two components: a lower level or suite of transport related protocols and a higher level signaling application related layer. For the case of a Transmission Control Protocol (TCP) / IP based communication network, it will be appreciated that the transport protocol suite, as referred to herein, refers to OSI layers 1 through 3. Consequently, with regard to TCP/IP based communication, OSI layers 4 through 7 are referred to herein as the higher level or signaling application related layers. Again, as both the ISO OSI and the SS7/MTP protocol models are well known to those skilled in the art of packet network communications, a detailed description and discussion of the basic OSI and SS7/MTP models is not presented herein. A detailed discussion of the OSI model can be found in Communications for Cooperating Systems OSI, SNA, and TCP/IP by R.J. Cypser, Addison-Wesley Publishing Company, Inc., 1991. Similarly, a detailed discussion of the SS7/MTP protocol can be found in Signaling System #7 by Travis Russell, 2nd ed. McGraw-Hill, Inc., 1998.

Given the configuration of network **100,** and the inherent incompatibility of the two communication transport protocol suites (MTP vs. TCP/IP), there is no way that an Internet protocol node can directly or indirectly access a database node in the SS7 component of the network. Similarly, there is no mechanism whereby an SS7 node can access a database node in the IP component of the network.

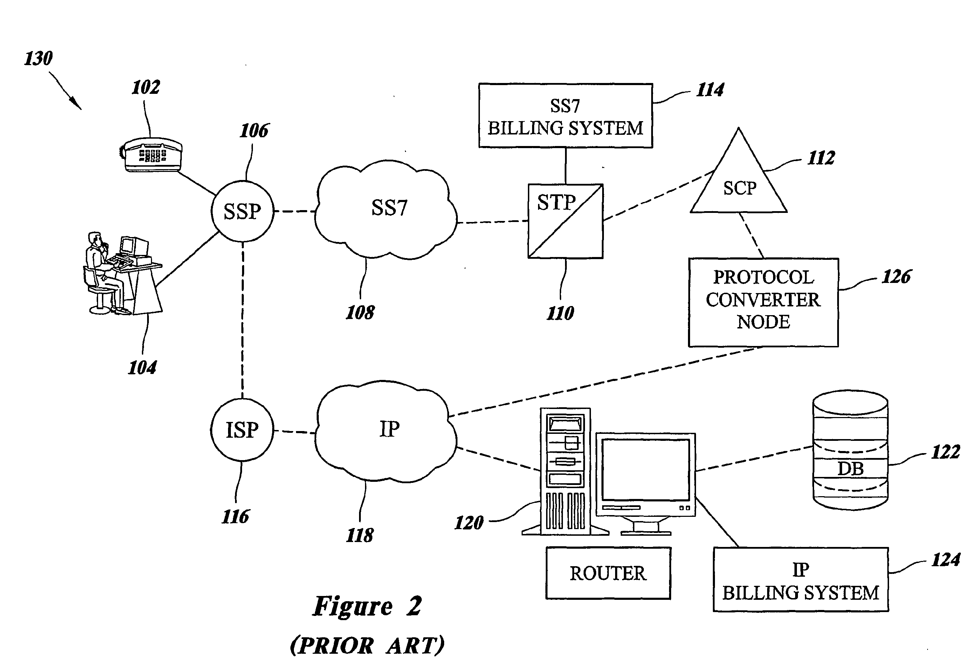

One solution to the above stated problem is to employ a stand-alone protocol converter node **126** that resides in front of the SS7 SCP node **112** as indicated in Figure 2. Protocol converter node **126** is capable of receiving a TCP/IP based non-SS7 database query message (i.e., a message that employs a non-SS7 signaling application protocol such as session initiation protocol (SIP), H.323, etc.) and translating this message into an SS7/MTP formatted query message that can be processed by SCP **112**. However, as indicated in Figure 2, such a configuration makes the problem of message accounting / billing considerably more complicated, as all query messages destined for SCP **112** do not necessarily pass through STP **110**. Furthermore, such a configuration requires that a network operator install and maintain separate protocol converting nodes, which generally increases network complexity and creates additional OA&M burdens.

What is needed is a system and method of providing a packet routing node that is capable of facilitating communication between networks that employ differing transport level protocols (e.g., MTP vs. TCP/IP) and differing signaling application level protocols (e.g., SS7 vs. SIP). Also needed is the ability for such a multi-protocol routing node to simultaneously provide centralized message accounting and billing capability in a multi-protocol communication network environment.

### Disclosure of the Invention

According to one aspect, the present invention as defined on independent claims 1, 16, 29, includes a communications network element that is capable of generally receiving, processing and routing signaling messages between communication networks that employ differing signaling application protocols. Furthermore, the communications network element, referred to herein as a Multi-Protocol Gateway (MPG) routing node, is adapted to make a routing decision, perform message translation at both the transport protocol suite and signaling protocol levels as required, so as to generally facilitate signaling message transmission to a node in a non-SS7 network. It will be appreciated that herein a transport protocol suite refers to the collection of lower level stack protocols associated with the transport of signaling message packets through a communications network, such as Message Transfer Part (MTP) or Transmission Control Protocol / Internet Protocol (TCP/IP).

It will be further appreciated that herein, a signaling application protocol refers to the particular type of higher level signaling protocol used in a communications network, such as SS7, SIP, H.323, or Normalized Call Control Protocol (NCCP). The session initiation protocol is defined in SIP: Session Initiation Protocol, RFC 2453, IETF Network Working Group (March 1999), the disclosure of which is incorporated herein by reference in its entirety. H.323 is defined in ITU Recommendation H.323: Packet Based Multimedia Systems (September 1999), the disclosure of which is incorporated by reference in its entirety. The normalized call control protocol is a protocol used by an SS7/IP gateway for communicating ISUP messages of a given national format to a normalized format for delivery to IP devices and vice versa. The MPG is further configured to update an integrated message accounting and billing system based on certain predetermined message criteria. Once again, it will be appreciated that an MPG routing node is adapted to make a routing decision, perform message translation at both the transport suite and signaling application protocol levels as required, so as to generally facilitate signaling message transmission to a node in a destination network that does not necessarily employ the same signaling or transport protocol suites as the network from which the message originated. Again, the MPG is further configured to update an integrated message accounting and billing system based on certain pre-determined criteria.

In one embodiment, the MPG routing node includes a communication module or modules capable of transmitting and receiving data packets over MTP, TCP/IP, UDP/IP, and Stream Control Transmission Protocol (SCTP)/IP based networks, wherein these data packets may employ SS7, SIP, H.323, NCCP or similar signaling protocols. The SCTP protocol is a protocol for transferring SS7 messages over an IP network. SCTP is defined in Stream Control Transmission Protocol <draft-ietf-sigtran-sctp-10.txt>, IETF Network Working Group (June 16, 2000), the disclosure of which is incorporated herein by reference in its entirety.

With particular regard to the transmission of SS7 information through TCP/IP type communication networks, the Assignee of the present application has previously disclosed a protocol (Transport Adapter Layer Interface, TALI) that was developed specifically for such an MTP-to-TCP/IP transmission scenario. A detailed description of the TALI protocol may be found in the *TALI 2.0 Technical Reference,* published by Tekelec, Inc. of Calabasas, California (June 2000), the disclosure of which is incorporated herein by reference in its entirety. The TALI protocol is also described in detail in commonly-assigned, copending U.S. Patent Application No. 09/588,852, filed June 6, 2000, and in Patent Cooperation Treaty Publication No. WO 00/35156, published June 15, 2000, the disclosures of each of which are incorporated herein by reference in their entirety.

The functions for providing MPG routing and accounting services are described herein as modules or processes. It is understood that these modules or processes may be implemented as computer-executable instructions embodied in a computer-readable medium. Alternatively, the modules or processes described herein may be implemented entirely in hardware. In yet another alternative embodiment, the modules or processes described herein may be implemented as a combination of hardware and software.

The processes and modules for providing MPG routing and accounting services are described below as being associated with cards or subsystems within a routing node. It is understood that these cards or subsystems include hardware for storing and executing the processes and modules. For example, each card or subsystems described below may include one or more microprocessors, such as an x86 or Pentium^{®} microprocessor available from Intel Corporation, and associated memory.

Accordingly, it is an object of the present invention to provide a routing node that facilitates the routing and accounting of messages between a plurality of network elements that do not share a common signaling application protocol.

It is another object of the present invention to provide a routing node that facilitates the accounting and routing of messages between a plurality of network elements that do not share a common transport protocol suite.

It is another object of the present invention to provide a routing node that facilitates the pre-routing translation of a received signaling message employing a first signaling protocol into a second signaling message that employs a Normalized Call Control Protocol (NCCP).

It is another object of the present invention to provide a multi-protocol routing and accounting node that is capable of determining the destination and corresponding routing address of a signaling message based, at least in part, on a particular service requested by the incoming message.

It is another object of the present invention to provide a multi-protocol routing and accounting node that is capable of determining the destination and corresponding routing address of a signaling message based, at least in part, on the message type of the incoming message.

It is another object of the present invention to provide a multi-protocol routing and accounting node that is capable of determining the destination and corresponding routing address of a signaling message based, at least in part, on an intermediate destination address specified in the message.

It is another object of the present invention to provide a multi-protocol routing and accounting node that is capable of determining the destination and corresponding routing address of a signaling message based, at least in part, on an origination or sending address specified in the message.

It is another object of the present invention to provide a multi-protocol routing and accounting node that is capable of determining the destination and corresponding routing address of a signaling message based, at least in part, on calling or called party information specified in the message.

It is another object of the present invention to provide a multi-protocol routing and accounting node that is capable of determining the destination and corresponding routing address of a signaling message based, at least in part, on ownership of a destination network node.

It is another object of the present invention to provide a multi-protocol routing and accounting node that is capable of determining the destination and corresponding routing address of a signaling message based, at least in part, on ownership of a network node that originated the message.

It is another object of the present invention to provide a routing and accounting node that is capable of receiving signaling messages having different transport protocol suites and signaling application protocols, wherein all messages are addressed to the routing and accounting node, and wherein the routing and accounting node further determines where to route the message and subsequently translates the message into the proper transport protocol suite and signaling protocol necessary for delivery to the destination.

Some of the objects of the invention having been stated hereinabove, other objects will become evident as the description proceeds, when taken in connection with the accompanying drawings as best described hereinbelow.

### Brief Description of the Drawings

Embodiments of the present invention will now be explained with reference to the accompanying drawings, of which:
Figure 1 is a network diagram illustrating a prior art network architecture that employs a first distributed, network specific billing solution;
Figure 2 is a network diagram illustrating a prior art network architecture that employs a second distributed, network specific billing solution;
Figure 3 is a schematic diagram of an STP switching node;
Figure 4 is a schematic diagram that illustrates an embodiment of a Multi-protocol Gateway (MPG) routing and accounting node of the present invention;
Figure 5 is a schematic diagram that illustrates a Multi-protocol Link Interface Module (MLIM) card and a processing flow path associated with an inbound signaling message;
Figure 6a is a table that illustrates a Multi-protocol Routing Database (MRD) which includes a Signaling System 7 (SS7) key structure;
Figure 6b is a table that illustrates a Multi-protocol Routing Database (MRD) which includes an Internet Protocol (IP) key structure;
Figure 7 is a schematic diagram that illustrates a Multi-protocol Link Interface Module (MLIM) card and a processing flow path associated with an outbound signaling message; and
Figure 8 is a table that illustrates a sample Usage and Measurements Database (UMD) structure and data.

### Detailed Description of the Invention

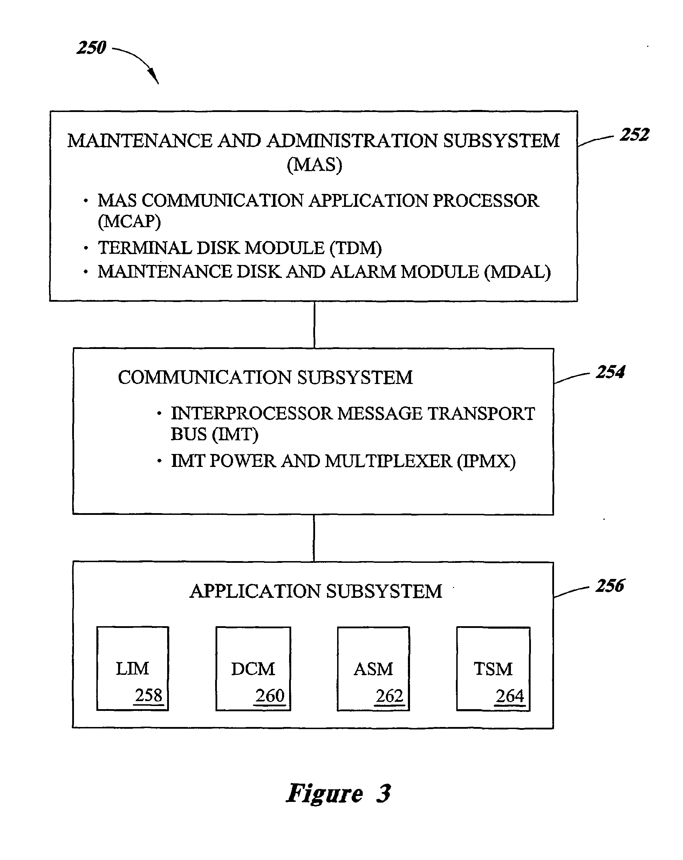

Disclosed herein are several embodiments of the present invention, all of which include a network element that performs functions similar to that of a traditional telecommunications network packet routing switch, such as a Signal Transfer Point (STP). Each of the embodiments described and discussed below, employs an internal architecture similar to that of high performance STP and signaling gateway (SG) products which are marketed by the assignee of the present application as the Eagle^{®} STP and IP⁷ Secure Gateway^{™}, respectively. A block diagram that generally illustrates the base internal architecture of the IP⁷ Secure Gateway^{™} product is shown in Figure 3. A detailed description of the Eagle^{®} STP may be found in the *Eagle^{®} Feature Guide* PN/910-1225-01, Rev. B, January 1998, published by Tekelec, Inc. of Calabasas, California, the disclosure of which is hereby incorporated herein by reference. Similarly, a detailed description of the IP⁷ Secure Gateway^{™} may be found in Tekelec publication PN/909-0767-01, Rev B, August 1999, titled *Feature Notice IP⁷ Secure Gateway*^{™} *Release* 1.0, the disclosure of which is hereby incorporated by reference. The specific functional components of an IP⁷ Secure Gateway^{™} for transmitting and receiving Transaction Capabilities Application Part (TCAP) messages over an Internet Protocol (IP) network are described in PCT Publication No. WO 00/35155, published June 15, 2000, the disclosure of which is incorporated herein by reference in its entirety. Similarly, the specific functional components of an IP⁷ Secure Gateway^{™} for transmitting and receiving ISDN User Part (ISUP) messages over an Internet Protocol (IP) network are described in the above-referenced PCT Publication No. WO 00/35156.

As described in the above referenced *Eagle^{®} Feature Guide,* an Eagle^{®} STP **250** includes the following subsystems: a Maintenance and Administration Subsystem (MAS) **252,** a communication subsystem **254** and an application subsystem **256.** The MAS **252** provides maintenance communications, initial program load, peripheral services, alarm processing and system disks. The communication subsystem **254** includes an Interprocessor Message Transport (IMT) bus that is the main communication bus among all subsystems in the Eagle^{®} STP **250.** This high-speed communications system functions as two 125 Mbps counter-rotating serial buses.

The application subsystem **256** includes application cards that are capable of communicating with the other cards through the IMT buses. Numerous types of application cards can be incorporated into STP **250,** including but not limited to: a Link Interface Module (LIM) **258** that provides SS7 links and X.25 links, a Data Communication Module (DCM) **260** that provides an Internet Protocol (IP) interface using Transmission Control Protocol (TCP), and an Application Service Module (ASM) **262** that provides global title translation, gateway screening and other services. A Translation Service Module (TSM) **264** may also be provided to support local number portability service. While multiple application modules or cards may be simultaneously configured and operatively connected to the IMT bus, it will be appreciated that each card is assigned a unique IMT bus address so as to generally facilitate the internal communication of messages between provisioned application cards that are attached to the bus. Once again, a detailed description of the Eagle^{®} STP other than DCM **260** is provided in the above-cited *Eagle^{®} Feature Guide* and need not be described in detail herein. DCM **260** is described in detail in one or more of the above-referenced PCT publications.

With particular regard to communication type modules, it should also be appreciated that in a manner similar to conventional SS7 LIM cards, the above mentioned DCM card can be employed to provide for the transport of Internet Protocol (IP) encapsulated SS7 messages over an IP network, as described in the above referenced *Feature Notice IP⁷ Secure Gateway^{™} Release* 1.0 publication. With regard to the TSM module and triggered LNP services mentioned above, a detailed description of the Tekelec triggered LNP solution may be found in the Feature Guide LNP LSMS PN/910-1598-01, Rev. A, January 1998, published by Tekelec, Inc. of Calabasas, California, the disclosure of which is hereby incorporated herein by reference. Furthermore, systems and methods for providing triggerless LNP functionality within a network routing node are described in commonly-assigned, co-pending U.S. Patent Application No. 09/503,541, filed February 14, 2000, the disclosure of which is incorporated herein by reference in its entirety.

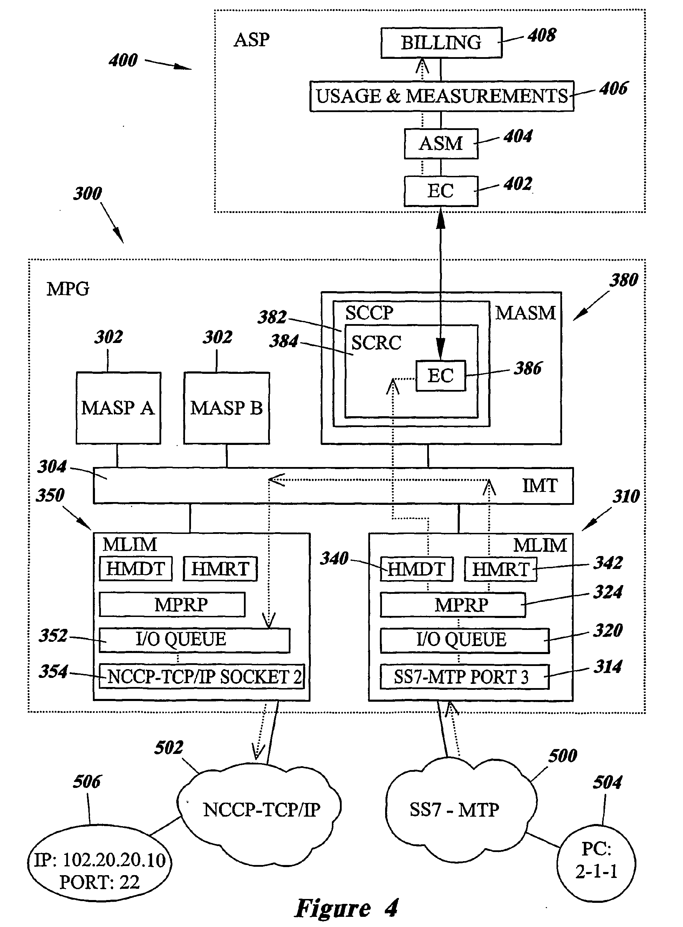

Shown in Figure 4 is one embodiment of a Multi-Protocol Gateway (MPG) packet routing switch of the present invention, generally indicated by the numeral **300.** MPG **300** is adapted to route message packets between two dissimilar communication networks, and to further provide message accounting and billing services associated with such inter-network routing. As discussed briefly above, MPG routing and accounting node **300** employs an internal architecture that is similar in design and operation to that of an Eagle^{®} STP and an IP⁷ Secure Gateway^{™}. As such, MPG node **300** generally includes an Interprocessor Message Transport (IMT) bus **304** that is the main communication bus among all subsystems in the node. MPG node further includes a Maintenance and Administration Subsystem (MAS) **302.** Again, MAS **302** provides maintenance communications, initial program load, peripheral services, alarm processing and system disks.

The MPG shown in Figure 4 also includes a pair of MLIM cards, **310** and **350,** and an integrated message accounting and billing subsystem, In the particular embodiment shown, the message accounting and billing subsystem is comprised of a Multi-protocol Accounting Service Module (MASM) **380** and an external Accounting Server Platform (ASP) **400.** From a practical implementation standpoint, ASP **400** could assume the form of a Sun Workstation or similar type computing platform. It will be further appreciated that the entire message accounting and billing subsystem could also be integrated within the MPG switch, such that no significant external computing platform is required.

It will also be appreciated that the MLIM and MASM cards **310, 350**, and **380,** respectively, are connected via the shared, internal high speed IMT communications bus **304,** and that multiple application cards (e.g., MLIMs, LIMs, DCMs, TSMs, ASMs, etc.) can be simultaneously configured and operatively connected to the IMT bus.

### Multi-protocol Link Interface Module (MLIM)

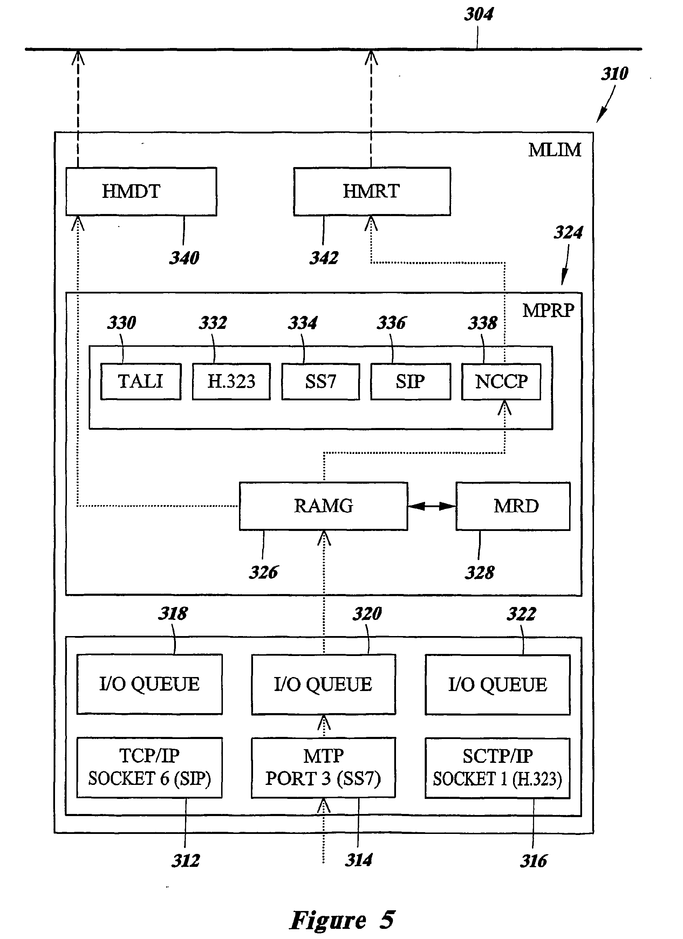

Shown in Figure 5 is one embodiment of a Multi-protocol Link Interface Module (MLIM) card **310** that is configured to transmit, receive, and generally facilitate communication between two communication networks that employ dissimilar signaling and transport protocol suites. MLIM **310** is somewhat similar in function and form to a conventional LIM, as described in the above referenced Tekelec Eagle and IP⁷ Secure Gateway product and design publication. The MLIM, described herein, expands on the conventional LIM concept so as to provide the additional capability to communicate signaling information between dissimilar networks that utilize a variety of non-SS7 based signaling protocols and non-MTP based transport protocol suites.

In general an MLIM card may be configured to include one or more transport protocol suite processes. In the example illustrated in Figure 5, MLIM card **310** is provisioned to support three transport protocol suite processes: a TCP/IP process **312,** an MTP process **314,** and an SCTP/IP process **316**. Associated with each of the transport protocol suite processes **312, 314,** and **316** is an input / output (I/O) queue **318, 320,** and **322,** respectively. It will be appreciated that these lower level protocol process can be configured via hardware, software or firmware to support the physical, data link, network, and transport layers of a variety of transport protocol suites such as MTP, TCP/IP, SCTP/IP, UDP/IP and others. As discussed previously, these lower level transport protocol suite processes are responsible for implementing the functions and services generally associated with OSI levels 1 through 4.

MLIM **310** further includes a Multi-Protocol Routing Process (MPRP) **324,** which is comprised of a Routing and Accounting Manager (RAMG) process **326,** a Multi-protocol Routing Database (MRD) process **328,** and a plurality of signaling protocol specific translation processes. More specifically, in the particular example shown in Figure 5, MLIM **310** is provisioned to include a TALI signaling protocol translation process **330,** an H.323 signaling protocol translation process **332,** an SS7 signaling protocol translation process **334,** a SIP signaling protocol translation process **336,** and an NCCP signaling protocol translation process **338.** It will be appreciated that each of these signaling protocol translation processes is adapted to receive an incoming signaling message that is formatted in a first signaling protocol and subsequently translate the contents of this message into a second signaling protocol. For instance, in the specific example illustrated in Figure 5, an SS7 signaling protocol message is received at MLIM **310** and subsequently delivered to NCCP signaling protocol translation process **338,** where the SS7 formatted message content is parsed and translated into an NCCP formatted signaling protocol message. As discussed above, an NCCP formatted signaling message is a normalized ISUP signaling message used by IP nodes in an IP network.

A discussion of the specific messages translated by protocol translation processes **330, 332, 334, 336,** and **338** is beyond the scope of this disclosure. What is important for purposes of the present invention is that lower layer and upper layer multiprotocol translation functionality, as well as accounting functionality, be located in the same network element or in one or more devices closely-coupled to the same network element. Providing the functions in the same network element greatly facilitates multiprotocol message routing and accounting, as will be discussed in more detail below.

In addition, the present invention is not intended to be limited to the protocol translation processes illustrated in Figure 5. For example, other protocol translation processes, such as M3UA, SUA, M2UA, M2PEER, IUA, MAP and WAP may be substituted for or included in addition to the processes illustrated in Figure 5 without departing from the scope of the invention.

MLIM **310** also includes an HMDT process **340** that is responsible for the internal distribution of messages that require processing by other subsystems (e.g., accounting and billing, local number portability, calling name delivery, etc.) in the MPG node, and an HMRT process **342** that is responsible for the internal distribution of messages that are being routed or through switched from one MLIM card to another.

With particular regard to the Routing and Accounting Manager (RAMG) process **326,** it will be appreciated that RAMG process is adapted to receive incoming signaling messages and determine; (1) whether routing address translation is required, (2) whether transport suite protocol translation is required, (3) whether signaling application protocol translation is required, and (4) whether accounting of the message is required. If message accounting is required, RAMG process **326** is configured so as to produce a new message that is subsequently delivered to an associated accounting & billing subsystem. With particular regard to determining the need for transport suite protocol translation, it will be appreciated that such a need may be indirectly implied with the selection of an outbound communication link, port or socket.

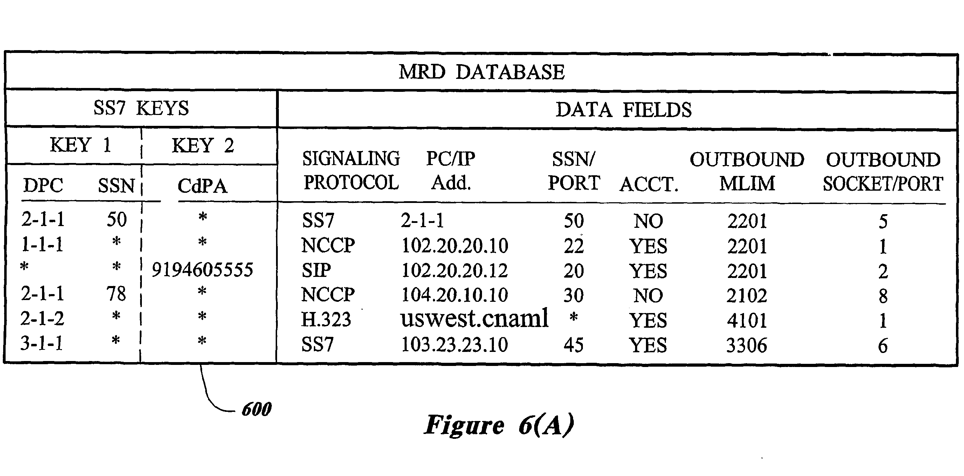

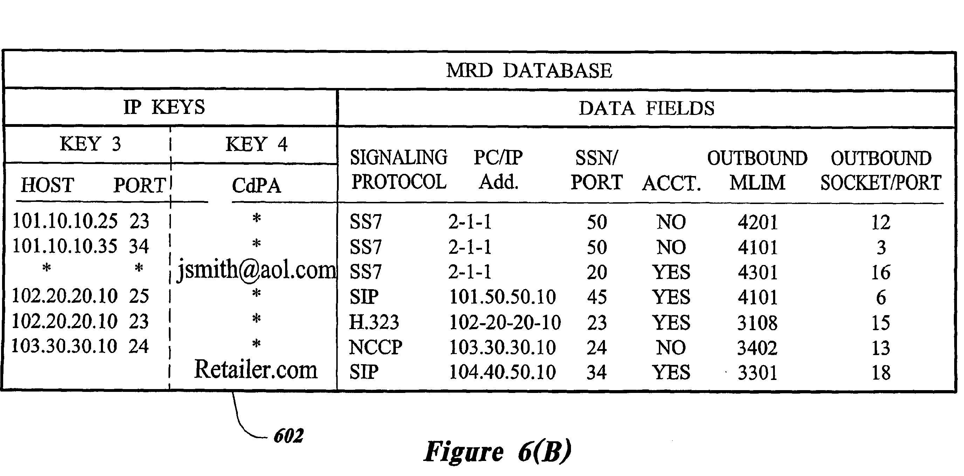

In any event, the above-mentioned four determinations are made with the assistance of an associated Multi-protocol Routing Database (MRD) process **328.** As generally indicated in Figures 6 and 6b, MRD process **328** may be comprised of multiple database table structures depending upon the particular MLIM configuration employed. More particularly, Figure 6a illustrates a sample MRD database structure **600 that** might be associated with an MLIM card that is configured to communicate with an SS7 network. Figure 6b illustrates a sample MRD database structure **602** that might be associated with an MLIM card that is configured to communicate with an IP network.

As such, it will be appreciated that if MLIM **310** configured with the MRD database **600** shown in Figure 6a receives an SS7 message destined for a node with an SS7 network address PC: 2-1-1 and SSN: 50, a lookup in the MRD database **600** would subsequently inform the RAMG process **326** that: (1) the appropriate destination address is PC: 2-1-1, SSN: 50 (i.e., no routing address change is necessary); (2) the appropriate destination address requires an SS7 formatted message (i.e., no transport suite or signaling protocol translation is necessary); and (3) the accounting subsystem should not be notified (*i*.e., no accounting of this message is necessary). Consequently, in this example scenario, the received SS7 signaling message would simply be routed or through switched.

However, it will be appreciated that if MLIM **310** configured with the MRD database **602** shown in Figure 6a receives an SS7 message destined for an SS7 network address PC: 1-1-1, a lookup in the MRD database **602** would inform the RAMG process **326** that: (1) the appropriate destination address is an IP socket comprised of an IP address, 102.20.20.10, and an IP port 22; (2) the appropriate destination address requires an NCCP formatted message; and (3) the accounting subsystem should be notified. Consequently, the received SS7 signaling message would be passed from the RAMG process **326** to the NCCP signaling protocol translation process **338.**

NCCP translation process **338** would subsequently examine the information content of the original SS7 message and generate an equivalent NCCP-formatted message, as per a pre-determined set of SS7-to-NCCP inter-protocol message type conversion rules. Such inter-protocol message type conversion rules might include, for example, instructions or rules for creating the NCCP equivalent of an ANSI ISUP IAM message. Furthermore, such conversion rules could include instructions for creating the NCCP equivalent of an 800 number, local number portability (LNP), or calling name (CNAM) SS7 TCAP query message.

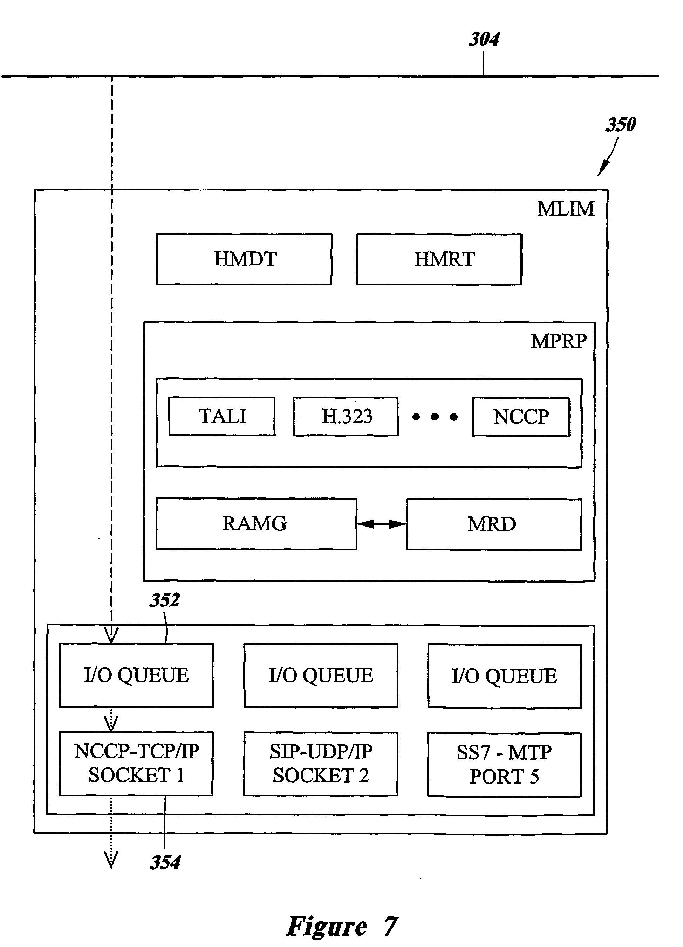

It will be appreciated from Figures 4, 5, and 6a, that once processing is completed NCCP translation process **338** passes the translated message on to HMRT process **342** for internal routing to the appropriate outbound IP-configured MLIM card that maintains TCP or UDP socket 1, with a corresponding IP address: 102.20.20.10, port 22. In the particular example present herein, TCP or UDP socket 1 has been established and is maintained on MLIM **350,** and MLIM **350** has been assigned an IMT bus address identifier of **2201.** As such the NCCP formatted message is internally routed to the outbound MLIM **350** and transport level protocol suite translation is effectively performed by the NCCP - TCP/IP socket process **354,** as indicated in Figure 7. In general, the outbound socket process is adapted to provide and apply the proper lower level transport protocol suite to the outbound signaling message so as to effectively prepare the outbound signaling message for transmission through the destination network.

It will be further appreciated that an incoming message could be translated or converted based on a domain name (DN) or an email address type identifier, as generally indicated in database table **602** (Figure 6b). As mentioned previously, it is also possible to translate from any one of the industry standard signaling protocols (e.g., SS7, SIP, H.323, etc.) to a normalized signaling protocol. Such a normalized protocol could be any protocol adapted to facilitate efficient translation of signaling information and to further provide a universal signaling protocol that can be easily utilized by nodes that are required to provide service to a variety of signaling networks.

With particular regard to the message accounting and billing functionality of the MPG routing node **300,** it will be appreciated that in one embodiment of the present invention, RAMG process **326** formulates an accounting message, related to a received signaling message, and passes this accounting message on to the HMDT process **340** for subsequent delivery to and processing by the MASM module **380,** as generally indicated in Figure 4. It will be appreciated that the accounting message could simply be a copy of the original received signaling message, or the accounting message could be of a message type associated specifically with the accounting subsystem. In a preferred embodiment, a normalized accounting message (NAM) format is employed that is analogous to the NCCP signaling protocol concept. That is, a NAM formatted accounting message employs a field or record structure that is essentially a superset of all parameters of interest from all signaling protocols of interest. As such, parameters of interest in a SIP formatted signaling message can be easily accommodated in a NAM accounting message, as can parameters of interest in an SS7 formatted signaling message. It will be appreciated that, in one embodiment, a NAM accounting message can be encapsulated within an SCCP packet prior to internal routing within the MPG node. Such SCCP encapsulation can be performed by a RAMG process. It will be further appreciated that the NAM format can be periodically expanded (or revised) to accommodate new or evolving signaling protocols that must be supported by an MPG node. In any event, the accounting subsystem is notified of the receipt of the incoming message.

### Message Accounting Subsystem

In the embodiment illustrated in Figure 4, MPG node **300** includes a message accounting and billing subsystem that is comprised of an internal MASM card **380,** and an external ASP accounting server platform **400.** It will be appreciated the combination of MASM card **380** and ASP accounting server **400** includes the database and control processes necessary to achieve the accounting and billing functionality of the present invention. Again, it should also be appreciated that the entire message accounting subsystem could also be integrated completely within the MPG node.

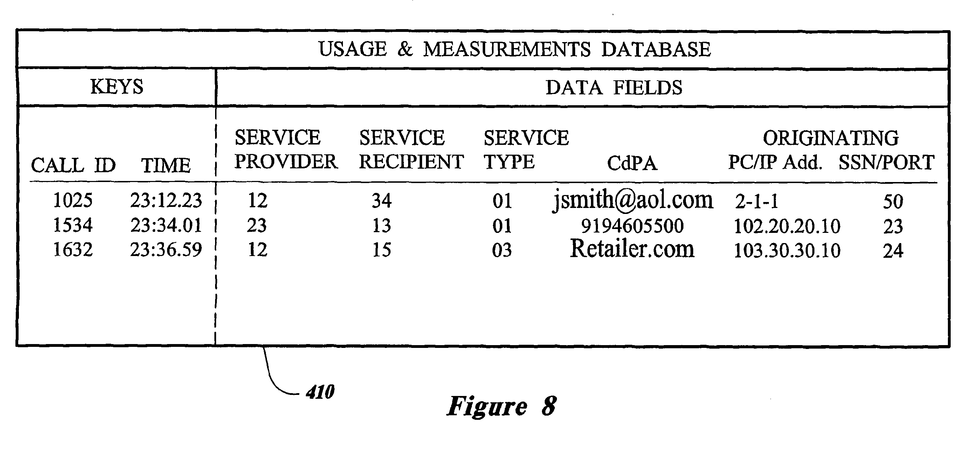

The MASM card **380** shown in Figure 4 includes a Signaling Connection Control Part (SCCP) subsystem **382** that is responsible for receiving and preliminary processing of incoming SCCP encapsulated accounting message packets. MASM card **380** also includes an SCCP controller known as a Signaling Connection Routing Controller (SCRC) process **384** and a high-speed Ethernet Controller (EC) process **386.** Once again, as described above, the SCCP subsystem **382** is responsible for receiving and preliminary processing of incoming SCCP encapsulated message packets, while the SCRC process **384** is responsible for discrimination and subsequent distribution of messages based on information contained in an SCCP packet. In the case of MASM card **380,** messages that satisfy the SCRC discrimination criteria are distributed or directed to the high-speed Ethernet Controller process **386**. EC process 386 is in turn responsible for controlling the process of communicating messages, via an Ethernet connection to and from the associated ASP server **400.** More particularly, ASP server **400** includes a corresponding high-speed Ethernet Controller process **402** that serves as the communications interface between MASM card **380** and an on-board Accounting Server Manager (ASM) process **404.** ASM process **404** is responsible for the de-capsulation or removal of the SCCP envelope that contains the accounting message. The de-capsulated accounting message is then passed to an adjacent Usage and Measurements process **406** where usage and measurement statistics are created and stored in a Usage and Measurements Database (UMD) **410,** such as that shown in Figure 8.

Usage and measurements statistics produced by such a process could include, but are not limited to, peg counts of messages received from a specific network address, a specific service provider, a specific service user, a specific IP socket, or a specific signaling link. As shown in sample UMD **410,** each "call" or communication is identified by a call ID, and certain predetermined information associated with a "call" or communication can be stored in the database. It will be appreciated that the information contained in a UMD database could be significantly more or less detailed than that indicated in the example shown in Figure 8.

In any event, such statistics could include information associated with the time-of-day that a message was received, the duration of a "call" or communication, general quality of service (QoS) indicators associated with a "call" or communication, information related to or identifying the type of service that is associated with a "call" or communication (i.e., broadband service related, call setup related, database query related, etc.). Such usage information could be used to bill a subscriber at different rates depending upon the type of service requested. For instance, a subscriber could be billed at one rate for a "call" or communication related to the downloading of a movie from a video server, and a different rate for a "call" associated with a real-time video - telephone conference. With such capability included within an MPG routing node, network operators greatly increased flexibility with regard to service-specific billing, without significantly increasing network OA&M requirements.

In order to facilitate such billing operations, ASP server **400** also includes a billing process **408** that is adapted to extract information stored by the Usage and Measurements process **406** and subsequently generate bills. Once again, information or parameters maintained by process **406** that may be used in the generation of bills could include, but is not limited to, a network address identifier, a service provider identifier, a service user identifier, an IP socket identifier, a signaling link identifier, and a service type identifier. It will be further appreciated that a network address identifier could include, but is not limited to a destination or origination SS7 point code, a destination or origination IP address, and a destination or origination domain name. Similarly, a user identifier could include, but is not limited to a calling or called party telephone number, and a destination or origination email address.

Furthermore, in the particular embodiment shown, copies of incoming signaling messages that require accounting service are encapsulated within an SCCP packet and subsequently internally routed to MASM **380.** It should be appreciated that SCCP encapsulation is not essential to the operation of the message accounting subsystem of the present invention. Other internal encapsulating protocols could be just as easily employed, provided that a suitably provisioned MASM module is capable of receiving and processing the encapsulated messages. In fact, no encapsulation necessarily need be performed, so long as the accounting message generated by a RAMG type process can be received and generally processed by a suitable configured MASM module.

### Multi-Protocol Gateway (MPG) Operation

In the example configuration shown in Figure 4, a first MLIM **310** is configured to communicate with an SS7-MTP network **500,** while a second MLIM **350** is configured to communicate with an NCCP-TCP/IP network **502.** As generally indicated in Figure 4, a first message is received by the first MLIM card **310** via an SS7-MTP Port process **314,** herein identified by a Port ID of 3. It will be appreciated that MLIM card **310** has been assigned an internal IMT bus address identifier of **4101.** As indicated in Figure 4, it is assumed that the first message was sent from a node **504** residing in the SS7 network **500.** Furthermore, node **504** is identified within the SS7 network by a point code (PC) value of 2-1-1, while the first message is addressed to a destination point code (DPC) value of 1-1-1. Lower level transport protocol suite processing is performed on the incoming first message by Port process **314,** and the first message is subsequently passed to an associated I/O queue 320. Following buffering in the I/O queue **320,** the first message is passed to the RAMG process **326.** RAMG process **326** identifies the first message as having arrived via Port process **314,** and directs a lookup in MRD database process **328** based on information contained in or associated with the first message.

According to the sample routing rules provided in Figure 6a, an incoming message that is addressed to a DPC value of 1-1-1 will be subsequently routed to a network element having an IP address of 102.20.20.10, port 22. In this example, MLIM **350** has been assigned an IMT bus address of 2201, and as indicated in Figure 6a, a connection or socket to this IP address has been established and is being maintained on the MLIM card having an IMT bus address of 2201. More specifically, a TCP/IP socket having a socket ID of 1 has been established on MLIM **350.** As further indicated in Figure 6a, the signaling protocol translation rule associated with the first message indicates the need to translate the received signaling message to an NCCP protocol prior to routing. Consequently, RAMG process **326** passes the first message to NCCP signaling protocol translation process **338** along with information returned by the MRD database lookup operation. NCCP signaling protocol translation process **338** receives the first message and performs the SS7 to NCCP translation or mapping operation, thereby effectively creating a second, functionally equivalent NCCP formatted signaling message.

As generally indicated in Figure 5, the second NCCP formatted message is subsequently passed from the NCCP signaling protocol translation process **338** to HMRT process **342.** HMRT process **342** identifies the destination MLIM card corresponding to IMT bus address 2201, and places the second signaling message on the IMT bus **304.** The second message is then received by the MLIM card **350**, and essentially directed to the outbound I/O queue **352** associated with the destination TCP/IP socket process **354.** Socket process **354** next receives the NCCP formatted signaling message and constructs or appends the appropriate lower level transport protocol suite required to facilitate transmission to the destination node through TCP/IP based network **502.** With lower level transport protocol suite processing complete, the NCCP formatted signaling message is transmitted into the TCP/IP based network **502,** as generally indicated in Figure 4.

Returning to Figure 5, it will be appreciated that following the MRD database lookup operation described above, RAMG process **326** is adapted to generate a NAM formatted accounting message that is associated with the first signaling message. This accounting message is produced in response to the instructions returned by the MRD process **328,** indicating that message accounting service is required for the first signaling message. In the embodiment of the present invention presented herein, the accounting message assumes the form of a NAM message that is essentially encapsulated within an SCCP formatted packet. This SCCP encapsulated message is subsequently directed to HMDT process **340,** which in turn directs the SCCP encapsulated accounting message to MASM card **380** via IMT bus **304.**

Once again, although an SCCP formatted accounting message is indicated in the particular embodiment shown in Figure 4 and described herein, it should be appreciated that the message directed to accounting subsystem need not be of an SCCP format. Other message formats could be employed, so long as the MASM card(s) were configured to receive and process the chosen account message format.

The encapsulated accounting message is received and processed by SCCP process **382** that is resident on MASM card **380,** so as to verify and generally validate the SCCP packet prior to further processing. The SCCP packet is next passed to the SCRC process **384,** which is responsible for discrimination and subsequent distribution of messages based on information contained in the SCCP packet. Messages that satisfy the SCRC discrimination criteria are distributed or directed to the high-speed Ethernet Controller (EC) process **386.** EC process **386** in turn communicates the SCCP message, via an Ethernet connection to the associated ASP server **400.**

As such, the SCCP encapsulated accounting message is received by a corresponding EC process **402** and subsequently passed to the Accounting Services Manager (ASM) process **404.** ASM process **404** examines the received accounting message, removes the SCCP encapsulating layer and extracts the information from the NAM formatted accounting message according to a pre-determined set of usage and measurement rules. This usage and measurement information is then provided to the Usage and Measurements process **406** for analysis and storage. Billing information may be generated by the accounting subsystem via the billing process **408.** Billing process **408** extracts information from the Usage and Measurements process **406** and applies a set of pre-determined billing rate rules, so as to effectively generate invoices or bills indicating costs associated with various aspects of communication services.

Other accounting services might include but are not limited to usage and measurements service, fraud detection service, and network management service. Although not explicitly shown, it will be appreciated that the external accounting server includes a user interface that provides a user-friendly method of extracting and utilizing the various accounting services data once it is collected.

## Claims

1. A network signaling message routing element (300) functioning as a multi-protocol signal transfer point and signaling message protocol translator, the network signaling message routing element comprising:
(a) a first communication module (310) capable of receiving, from a first communication network (500), a first signaling message formatted according to a first transport protocol suite and containing information that is formatted according to a first signaling protocol;
(b) a multi-protocol routing database (MRD) (328) located on the first communication module (310) for storing signaling protocol translation and routing information;
(c) a multi-protocol routing module (324) located on the first communication module (310) for extracting information from the multi-protocol routing database (MRD) (328) and directing the first signaling message to a translation module (330, 332, 334, 336, 338) based on the information;
(d) said signaling protocol translation module (330, 332, 334, 336, 338) for receiving the first signaling message and for converting the information formatted according to the first signaling protocol to a second signaling protocol;
(e) a routing module (HMRT) (342) for routing the first signaling message converted in the second signaling protocol from the first communication module (310) to a second communication module (350); and
(f) said second communication module (350) including a transport protocol suite module (354) for receiving the first signaling message and for applying a second transport protocol suite and associated routing instructions to the first signaling message, the second communication module (350) being capable of transmitting, to a second communication network (502), the first signaling message formatted according to the second transport protocol suite containing information that is formatted according to the second signaling protocol.

2. The network signaling message routing element (300) of claim 1 wherein the first signaling protocol is a signaling system 7 (SS7) signaling protocol, a session initiation protocol (SIP) signaling protocol, an H.323 signaling protocol, or a normalized call control signaling protocol.

3. The network signaling message routing element (300) of claim 1 wherein the second signaling protocol is an SS7 signaling protocol, a session initiation protocol (SIP) signaling protocol, an H. 323 signaling protocol, or a normalized call control signaling protocol.

4. The network signaling message routing element (300) of claim 1 wherein the first transport protocol suite includes the message transfer part (MTP) of the SS7 protocol, the transmission control protocol/internet protocol (TCP/IP), or the stream control transmission protocol (SCTP/IP).

5. The network signaling message routing element (300) of claim 1 wherein the second transport protocol suite includes the message transfer part (MTP) of the SS7 protocol, the transmission control protocol/internet protocol (TCP/IP), or the stream control transmission protocol (SCTP/IP).

6. The network signaling message routing element (300) of claim 1 including a message accounting subsystem (380, 400) for generating and maintaining usage measurements and billing information associated with the messages that are processed and routed through the routing element.

7. The network signaling message routing element (300) of claim 6 wherein the message accounting subsystem (380,400) is located within the network signaling message routing element (300).

8. The network signaling message routing element (300) of claim 6 wherein the message accounting subsystem (380, 400) includes a database platform (400) external to the signaling message routing element (300).

9. The network signaling message routing element (300) of claim 8 wherein the external database platform (400) is connected to the network routing element (300) via a high-speed Ethernet link.

10. The network signaling message routing element (300) of claim 1 wherein the multi-protocol routing database (MRD) includes message accounting subsystem (380, 400) processing instructions.

11. The network signaling message routing element (300) of claim 6 wherein the message accounting subsystem (380,400) is configured to receive a copy of the first message.

12. The network signaling message routing element (300) of claim 6 wherein the message accounting subsystem (380,400) is configured to receive a Normalized Accounting Message (NAM) message that is based on information contained in the first message.

13. The network signaling message routing element (300) of claim 1 wherein the multi-protocol routing database (MRD) protocol translation information includes signaling protocol translation instructions.

14. The network signaling message routing element (300) of claim 1 wherein the multi-protocol routing database (MRD) is indexed by IP Host and Port values, socket values, point codes, or called party address values.

15. The network signaling message routing element (300) of claim 14 wherein the called party address values include telephone numbers, domain names, or email addresses.

16. A method for functioning as a multi-protocol signal transfer point and signaling message protocol translator for routing signaling messages between communication networks (500, 502) with differing signaling protocols and differing transport protocol suites, the method comprising:
(a) receiving, at a first communication module (310), from a first communication network (500) that employs a first transport protocol suite, a first signaling message formatted according to a first signaling protocol;
(b) determining where to route the first signaling message;
(c) determining whether the first signaling message requires a signaling protocol translation;
(d) in response to determining that the first signaling message requires a signaling protocol translation, routing the first signaling message to a signaling protocol translation module (330, 332, 334, 336, 338) located on the first communication module (310), based on information extracted from a multi-protocol routing database (MRD) (328) located on the first communication module (310), for translation into an equivalent first signaling message formatted in a second signaling protocol;
(e) routing, by a routing module (HMRT) (342), of the equivalent first signaling message formatted in the second signaling protocol from the first communication module (310) to a second communication module (350), and, at the second communication module (350):
(i) applying a second transport protocol suite and associated routing instructions to the equivalent first signaling message; and
(ii) transmitting the equivalent first signaling message into a second communication network (502).

17. The method of claim 16 wherein the first signaling protocol is a signaling system 7 (SS7) signaling protocol, a session initiation protocol (SIP) signaling protocol, an H.323 signaling protocol, or a normalized call control protocol (NCCP) signaling protocol.

18. The method of claim 16 wherein the second signaling protocol is an SS7 signaling protocol, a session initiation protocol (SIP) signaling protocol, an H.323 signaling protocol, or a normalized call control protocol (NCCP) signaling protocol.

19. The method of claim 16 wherein the first transport protocol suite includes the message transfer part (MTP) of the SS7 signaling protocol, the transmission control protocol/internet protocol (TCP/IP), or stream control transmission protocol/internet protocol (SCTP/IP).

20. The method of claim 16 wherein the second transport protocol suite includes the message transfer part (MTP) of the SS7 protocol, the transmission control protocol/internet protocol (TCP/IP), or the stream control transmission protocol/internet protocol (SCTP/IP).

21. The method of claim 16 wherein determining where to route the first signaling message includes examining routing rules that are stored in a multi-protocol routing database (MRD).

22. The method of claim 16 wherein determining whether the first signaling message requires signaling protocol translation includes signaling protocol translation rules that are stored in a multi-protocol routing database (MRD).

23. The method of claim 16 comprising determining whether message accounting service is required.

24. The method of claim 23 comprising, in response to determining that message accounting service is required, sending an accounting message to a message accounting subsystem (380, 400).

25. The method of claim 24 wherein the accounting message is a copy of the first message.

26. The method of claim 24 wherein the accounting message is a normalized accounting message (NAM) message based on information contained in a first message.

27. The method of claim 23 wherein determining whether message accounting service is required includes examining message accounting service rules stored in a multi-protocol routing database (MRD).

28. The method of claim 16 wherein applying the second transport protocol suite includes applying the second transport protocol suite at an outbound multi-protocol link interface module (MLIM).

29. A computer program product for controlling one or more processing modules to function as a multi-protocol signal transfer point and a signaling message protocol translator for routing signaling messages between communication networks (500, 502) with differing signaling protocols and different transport protocols, the computer program product comprising computer-executable instructions embodied in a computer-readable medium for performing steps comprising:
(a) receiving, at a first communication module (310), from a first communication network (500) that employs a first transport protocol suite, a first signaling message formatted according to a first signaling protocol;
(b) determining where to route the first signaling message;
(c) determining whether the first signaling message requires a signaling protocol translation;
(d) in response to determining that the first signaling message requires a signaling protocol translation, routing the first signaling message to a signaling protocol translation module (330, 332, 334, 336, 338) located on the first communication module (310), based on information extracted from a multi-protocol routing database (MRD) (328) located on the first communication module (310), for translation into an equivalent first signaling message formatted in a second signaling protocol;
(e) routing, by a routing module (HMRT) (342), of the equivalent first signaling message formatted in the second signaling protocol from the first communication module (310) to a second communication module (350), and, at the second communication module (350):
(i) applying a second transport protocol suite and associated routing instructions to the equivalent first signaling message; and
(ii) transmitting the equivalent first signaling message into a second communication network (502).

30. The computer program product of claim 29 wherein performing a lookup in the multi-protocol routing database (MRD) includes determining whether accounting is required for the first signaling message.

31. The computer program product of claim 30 comprising, in response to determining that accounting is required for the first signaling message, formulating a normalized accounting message based on the accounting instructions.

32. The computer program product of claim 31 comprising routing the normalized accounting message to message accounting subsystem (380,400).

33. The computer program product of claim 29 wherein performing a lookup in the multi-protocol routing database (MRD) includes performing the lookup using a point code contained in the first signaling message.

34. The computer program product of claim 29 wherein performing a lookup in the multi-protocol routing database (MRD) includes performing the lookup using a called party address contained in the first signaling message.

35. The computer program product of claim 29 wherein performing a lookup in the multi-protocol routing database (MRD) includes performing the lookup using an IP-address contained in the first signaling message.

36. The computer program product of claim 29 wherein performing a lookup in the multi-protocol routing database (MRD) includes performing the lookup using a domain name contained in the first signaling message.

## Patentansprüche

1. Netzsignalisierungsnachrichten-Routingelement (300), das als ein Mehrprotokoll-Signaltransferpunkt und Signalisierungsnachrichtenprotokollübersetzer funktioniert, wobei das Netzsignalisierungsnachrichten-Routingelement aufweist:
(a) ein erstes Kommunikationsmodul (310), das befähigt ist, aus einem ersten Kommunikationsnetz (500) eine erste Signalisierungsnachricht zu empfangen, die gemäß einer ersten Transportprotokollsuite formatiert ist und Information enthält, die gemäß einem ersten Signalisierungsprotokoll formatiert ist;
(b) eine Mehrprotokoll-Routingdatenbank (MRD) (328), die im ersten Kommunikationsmodul (310) angeordnet ist, zum Speichern von Signalisierungsprotokollübersetzungs-und -routinginformation;
(c) ein Mehrprotokoll-Routingmodul (324), das am ersten Kommunikationsmodul (310) angeordnet ist, zum Entnehmen von Information aus der Mehrprotokoll-Routingdatenbank (MRD) (328) und Absenden der ersten Signalisierungsnachricht an ein Übersetzungsmodul (330, 332, 334, 336, 338) basierend auf der Information;
(d) das Signalisierungsprotokollübersetzungsmodul (330, 332, 334, 336, 338) zum Empfangen der ersten Signalisierungsnachricht und Umwandeln der gemäß dem ersten Signalisierungsprotokoll formatierten Information in ein zweites Signalisierungsprotokoll;
(e) ein Routingmodul (HMRT) (342) zum Routing der in das zweite Signalisierungsprotokoll umgewandelten ersten Signalisierungsnachricht von dem ersten Kommunikationsmodul (310) an ein zweites Kommunikationsmodul (350); und
(f) das zweite Kommunikationsmodul (350), mit einem Transportprotokollsuitenmodul (354) zum Empfangen der ersten Signalisierungsnachricht und zum Anwenden einer zweiten Transportprotokollsuite und zugehöriger Routinganweisungen auf die erste Signalisierungsnachricht, wobei das zweite Kommunikationsmodul (350) befähigt ist, die gemäß der zweiten Transportprotokollsuite formatierte erste Signalisierungsnachricht, die gemäß dem zweiten Signalisierungsprotokoll formatierte Information enthält, in ein zweites Kommunikationsnetz (502) zu übermitteln.

2. Netzsignalisierungsnachrichten-Routingelement (300) nach Anspruch 1, wobei das erste Signalisierungsprotokoll ein Signalisierungssystem-Nummer-7-(SS7)-Signalisierungsprotokoll, ein Sitzungsinitialisierungsprotokoll-(SIP)-Signalisierungsprotokoll, ein H.323-Signalisierungsprotokoll oder ein normalisiertes Rufsteuerungs-Signalisierungsprotokoll ist.

3. Netzsignalisierungsnachrichten-Routingelement (300) nach Anspruch 1, wobei das zweite Signalisierungsprotokoll ein SS7-Signalisierungsprotokoll, ein Sitzungsinitialisierungs-protokoll-(SIP)-Signalisierungsprotokoll, ein H.323-Signalisierungsprotokoll oder ein normalisiertes Rufsteuerungs-Signalisierungsprotokoll ist.

4. Netzsignalisierungsnachrichten-Routingelement (300) nach Anspruch 1, wobei die erste Transportprotokollsuite den Nachrichtenübertragungsteil (MTP) des SS7-Protokolls, das Übertragungssteuerungsprotokoll/Internetprotokoll (TCP/IP) oder das Datenstromsteuerungsübertragungsprotokoll (SCTP/IP) umfasst.

5. Netzsignalisierungsnachrichten-Routingelement (300) nach Anspruch 1, wobei die zweite Transportprotokollsuite den Nachrichtenübertragungsteil (MTP) des SS7-Protokolls, das Übertragungssteuerungsprotokoll/Internetprotokoll (TCP/IP) oder das Datenstromsteuerungsübertragungsprotokoll (SCTP/IP) umfasst.

6. Netzsignalisierungsnachrichten-Routingelement (300) nach Anspruch 1 mit einem Nachrichtenbuchhaltungs-Untersystem (380, 400) zum Erzeugen und Aktualisieren von Nutzungsmessungen und Abrechnungsinformation, die zu den verarbeiteten und durch das Routingelement gerouteten Nachrichten gehören.

7. Netzsignalisierungsnachrichten-Routingelement (300) nach Anspruch 6, wobei das Nachrichtenbuchhaltungs-Untersystem (380, 400) im Netzsignalisierungsnachrichten-Routingelement (300) angeordnet ist.

8. Netzsignalisierungsnachrichten-Routingelement (300) nach Anspruch 6, wobei das Nachrichtenbuchhaltungs-Untersystem (380, 400) eine Datenbankplattform (400) außerhalb des Signalisierungsnachrichten-Routingelements (300) ist.

9. Netzsignalisierungsnachrichten-Routingelement (300) nach Anspruch 8, wobei die externe Datenbankplattform (400) über eine Hochgeschwindigkeits-Ethernet-Verbindung mit der externen Datenbankplattform (400) verbunden ist.

10. Netzsignalisierungsnachrichten-Routingelement (300) nach Anspruch 1, wobei die Mehrprotokoll-Routingdatenbank (MRD) Nachrichtenbuchhaltungs-Untersystem- (380, 400) Verarbeitungsanweisungen beinhaltet.

11. Netzsignalisierungsnachrichten-Routingelement (300) nach Anspruch 6, wobei das Nachrichtenbuchhaltungs-Untersystem (380, 400) ausgebildet ist, eine Kopie der ersten Nachricht zu empfangen.

12. Netzsignalisierungsnachrichten-Routingelement (300) nach Anspruch 6, wobei das Nachrichtenbuchhaltungs-Untersystem (380, 400) ausgebildet ist, eine Normalisierte Buchhaltungsnachricht (NAM) zu empfangen, die auf in der ersten Nachricht enthaltener Information basiert.

13. Netzsignalisierungsnachrichten-Routingelement (300) nach Anspruch 1, wobei die Mehrprotokoll-Routingdatenbank-(MRD)-Protokollübersetzungsinformation Signalisierungsprotokollübersetzungsanweisungen beinhaltet.

14. Netzsignalisierungsnachrichten-Routingelement (300) nach Anspruch 1, wobei die Mehrprotokoll-Routingdatenbank (MRD) nach IP-Host- und Portwerten, Socketwerten, Punktcodes oder Adresswerten angerufener Parteien indiziert ist.

15. Netzsignalisierungsnachrichten-Routingelement (300) nach Anspruch 14, wobei die Adresswerte der angerufenen Parteien Telefonnummern, Domainnamen oder E-Mail-Adressen umfassen.

16. Verfahren zum Funktionieren als ein Mehrprotokoll-Signaltransferpunkt und Signalisierungsnachrichtenprotokollübersetzer zum Routing von Signalisierungsnachrichten zwischen Kommunikationsnetzen (500, 502) mit unterschiedlichen Signalisierungsprotokollen und unterschiedlichen Transportprotokollsuiten, wobei das Verfahren umfasst:
(a) Empfangen, in einem ersten Kommunikationsmodul (310), aus einem ersten Kommunikationsnetz (500), das eine erste Transportprotokollsuite verwendet, einer ersten Signalisierungsnachricht, die gemäß einem ersten Signalisierungsprotokoll formatiert ist;
(b) Bestimmen, wohin die erste Signalisierungsnachricht zu routen ist;
(c) Bestimmen, ob die erste Signalisierungsnachricht eine Signalisierungsprotokollübersetzung benötigt;
(d) in Antwort darauf, dass bestimmt wurde, dass die erste Signalisierungsnachricht eine Signalisierungsprotokollübersetzung benötigt, Routing der ersten Signalisierungsnachricht an ein beim ersten Kommunikationsmodul (310) angeordnetes Signalisierungsprotokollübersetzungsmodul (330, 332, 334, 336, 338), basierend auf Information, die einer im ersten Kommunikationsmodul (310) angeordneten Mehrprotokoll-Routingdatenbank (MRD) (328) entnommen wurde, zur Übersetzung in eine äquivalente erste Signalisierungsnachricht, die in einem zweiten Signalisierungsprotokoll formatiert ist;
(e) Routing, durch ein Routingmodul (HMRT) (342), der äquivalenten ersten Signalisierungsnachricht, die im zweiten Signalisierungsprotokoll formatiert ist, vom ersten Kommunikationsmodul (310) an ein zweites Kommunikationsmodul (350), sowie, im zweiten Kommunikationsmodul (350):
(i) Anwenden einer zweiten Transportprotokollsuite und zugehöriger Routinganweisungen auf die äquivalente erste Signalisierungsnachricht; und
(ii) Übermitteln der äquivalenten ersten Signalisierungsnachricht in ein zweites Kommunikationsnetz (502).

17. Verfahren nach Anspruch 16, wobei das erste Signalisierungsprotokoll ein Signalisierungssystem-Nummer-7-(SS7)-Signalisierungsprotokoll, ein Sitzungsinitialisierungsprotokoll-(SIP)-Signalisierungsprotokoll, ein H.323-Signalisierungsprotokoll oder ein normalisiertes Rufsteuerungsprotokoll-(NCCP)-Signalisierungsprotokoll ist.

18. Verfahren nach Anspruch 16, wobei das zweite Signalisierungsprotokoll ein SS7-Signalisierungsprotokoll, ein Sitzungsinitialisierungsprotokoll-(SIP)-Signalisierungsprotokoll, ein H.323-Signalisierungsprotokoll oder ein normalisiertes Rufsteuerungsprotokoll-(NCCP)-Signalisierungsprotokoll ist.

19. Verfahren nach Anspruch 16, wobei die erste Transportprotokollsuite den Nachrichtenübertragungsteil (MTP) des SS7-Signalisierungsprotokolls, das Übertragungssteuerungsprotokoll/Internetprotokoll (TCP/IP) oder das Datenstromsteuerungsübertragungsprotokoll (SCTP/IP) umfasst.

20. Verfahren nach Anspruch 16, wobei die zweite Transportprotokollsuite den Nachrichtenübertragungsteil (MTP) des SS7-Protokolls, das Übertragungssteuerungsprotokoll/Internetprotokoll (TCP/IP) oder das Datenstromsteuerungsübertragungsprotokoll (SCTP/IP) umfasst.

21. Verfahren nach Anspruch 16, wobei das Bestimmen, wohin die erste Signalisierungsnachricht zu routen ist, Überprüfen von Routingregeln umfasst, die in einer Mehrprotokoll-Routingdatenbank (MRD) gespeichert sind.

22. Verfahren nach Anspruch 16, wobei das Bestimmen, ob die erste Signalisierungsnachricht eine Signalisierungsprotokollübersetzung benötigt, Signalisierungsprotokollübersetzungsregeln beinhaltet, die in einer Mehrprotokoll-Routingdatenbank (MRD) gespeichert sind.

23. Verfahren nach Anspruch 16, das ein Bestimmen umfasst, ob ein Nachrichtenbuchhaltungsdienst benötigt wird.

24. Verfahren nach Anspruch 23, das in Antwort darauf, dass bestimmt wurde, dass der Nachrichtenbuchhaltungsdienst benötigt wird, Übermitteln einer Buchhaltungsnachricht an ein Nachrichtenbuchhaltungs-Untersystem (380, 400) umfasst.

25. Verfahren nach Anspruch 24, wobei die Buchhaltungsnachricht eine Kopie der ersten Nachricht ist.

26. Verfahren nach Anspruch 24, wobei die Buchhaltungsnachricht eine normalisierte Buchhaltungsnachrichts-(NAM)-Nachricht ist, die auf in einer ersten Nachricht enthaltener Information basiert.

27. Verfahren nach Anspruch 23, wobei das Bestimmen, ob ein Nachrichtenbuchhaltungsdienst benötigt wird, Überprüfen von Nachrichtenbuchhaltungsdienstregeln umfasst, die in einer Mehrprotokoll-Routingdatenbank (MRD) gespeichert sind.

28. Verfahren nach Anspruch 16, wobei das Anwenden der zweiten Transportprotokollsuite Anwenden der zweiten Transportprotokollsuite in einem auswärtsgerichteten Mehrprotokollverbindungsschnittstellenmodul (MLIM) umfasst.

29. Computerprogrammprodukt zum Steuern eines oder mehrerer Verarbeitungsmodule, um als ein Mehrprotokoll-Signaltransferpunkt und Signalisierungsnachrichtenprotokollübersetzer zum Routing von Signalisierungsnachrichten zwischen Kommunikationsnetzen (500, 502) mit unterschiedlichen Signalisierungsprotokollen und unterschiedlichen Transportprotokollsuiten zu funktionieren, wobei das Computerprogrammprodukt in einem computerlesbaren Medium dargestellte computerausführbare Anweisungen zum Ausführen von Schritten aufweist, die umfassen:
(a) Empfangen, in einem ersten Kommunikationsmodul (310), aus einem ersten Kommunikationsnetz (500), das eine erste Transportprotokollsuite verwendet, einer ersten Signalisierungsnachricht, die gemäß einem ersten Signalisierungsprotokoll formatiert ist;
(b) Bestimmen, wohin die erste Signalisierungsnachricht zu routen ist;
(c) Bestimmen, ob die erste Signalisierungsnachricht eine Signalisierungsprotokollübersetzung benötigt;
(d) in Antwort darauf, dass bestimmt wurde, dass die erste Signalisierungsnachricht eine Signalisierungsprotokollübersetzung benötigt, Routing der ersten Signalisierungsnachricht an ein beim ersten Kommunikationsmodul (310) angeordnetes Signalisierungsprotokollübersetzungsmodul (330, 332, 334, 336, 338), basierend auf Information, die einer im ersten Kommunikationsmodul (310) angeordneten Mehrprotokoll-Routingdatenbank (MRD) (328) entnommen wurde, zur Übersetzung in eine äquivalente erste Signalisierungsnachricht, die in einem zweiten Signalisierungsprotokoll formatiert ist;
(e) Routing, durch ein Routingmodul (HMRT) (342), der äquivalenten ersten Signalisierungsnachricht, die im zweiten Signalisierungsprotokoll formatiert ist, vom ersten Kommunikationsmodul (310) an ein zweites Kommunikationsmodul (350), sowie, im zweiten Kommunikationsmodul (350):
(i) Anwenden einer zweiten Transportprotokollsuite und zugehöriger Routinganweisungen auf die äquivalente erste Signalisierungsnachricht; und
(ii) Übermitteln der äquivalenten ersten Signalisierungsnachricht in ein zweites Kommunikationsnetz (502).

30. Computerprogrammprodukt nach Anspruch 29, wobei das Ausführen einer Abfrage in der Mehrprotokoll-Routingdatenbank (MRD) Bestimmen umfasst, ob Buchhaltung für die erste Signalisierungsnachricht benötigt wird.

31. Computerprogrammprodukt nach Anspruch 30, welches, in Antwort darauf, dass Buchhaltung für die erste Signalisierungsnachricht benötigt wird, ein Abfassen einer normalisierten Buchhaltungsnachricht basierend auf den Buchhaltungsanweisungen aufweist.

32. Computerprogrammprodukt nach Anspruch 31, welches ein Routing der normalisierten Buchhaltungsnachricht an ein Nachrichtenbuchhaltungs-Untersystem (380, 400) aufweist.

33. Computerprogrammprodukt nach Anspruch 29, wobei das Ausführen einer Abfrage in der Mehrprotokoll-Routingdatenbank (MRD) Ausführen der Abfrage mittels eines in der ersten Signalisierungsnachricht enthaltenen Punktcodes umfasst.

34. Computerprogrammprodukt nach Anspruch 29, wobei das Ausführen einer Abfrage in der Mehrprotokoll-Routingdatenbank (MRD) Ausführen der Abfrage mittels einer in der ersten Signalisierungsnachricht enthaltenen Adresse einer angerufenen Partei umfasst.

35. Computerprogrammprodukt nach Anspruch 29, wobei das Ausführen einer Abfrage in der Mehrprotokoll-Routingdatenbank (MRD) Ausführen der Abfrage mittels einer in der ersten Signalisierungsnachricht enthaltenen IP-Adresse umfasst.

36. Computerprogrammprodukt nach Anspruch 29, wobei das Ausführen einer Abfrage in der Mehrprotokoll-Routingdatenbank (MRD) Ausführen der Abfrage mittels eines in der ersten Signalisierungsnachricht enthaltenen Domainnamens umfasst.

## Revendications

1. Elément de routage de messages de signalisation de réseau (300) fonctionnant comme un traducteur de protocole de points de transfert de signaux et messages de signalisation multiprotocole, l'élément de routage de messages de signalisation de réseau comprenant :
(a) un premier module de communication (310) capable de recevoir, à partir d'un premier réseau de communication (500), un premier message de signalisation formaté selon une première suite de protocoles de transport et contenant une information qui est formatée selon un premier protocole de signalisation ;
(b) une base de données de routage multiprotocole (MRD) (328) située sur le premier module de communication (310) pour stocker une information de traduction de protocole de signalisation et de routage ;
(c) un module de routage multiprotocole (324) situé sur le premier module de communication (310) pour extraire une information de la base de données de routage multiprotocole (MRD) (328) et diriger le premier message de signalisation vers un module de traduction (330, 332, 334, 336, 338) sur la base de l'information ;
(d) ledit module de traduction de protocole de signalisation (330, 332, 334, 336, 338) pour recevoir le premier message de signalisation et pour convertir l'information formatée selon le premier protocole de signalisation en un deuxième protocole de signalisation ;
(e) un module de routage (HMRT) (342) pour effectuer le routage du premier message de signalisation converti en le deuxième protocole de signalisation à partir du premier module de communication (310) vers un deuxième module de communication (350) ; et
(f) ledit deuxième module de communication (350) incluant un module de suite de protocoles de transport (354) pour recevoir le premier message de signalisation et pour appliquer une deuxième suite de protocoles de transport et des instructions de routage associées au premier message de signalisation, le deuxième module de communication (350) étant capable de transmettre, vers un deuxième réseau de communication (502), le premier message de signalisation formaté selon la deuxième suite de protocoles de transport contenant une information qui est formatée selon le deuxième protocole de signalisation.

2. Elément de routage de messages de signalisation de réseau (300) selon la revendication 1, dans lequel le premier protocole de signalisation est un protocole de signalisation de système de signalisation 7 (SS7), un protocole de signalisation de protocole d'initiation de session (SIP), un protocole de signalisation H.323, ou un protocole de signalisation de commandes d'appels normalisé.

3. Elément de routage de messages de signalisation de réseau (300) selon la revendication 1, dans lequel le deuxième protocole de signalisation est un protocole de signalisation SS7, un protocole de signalisation de protocole d'initiation de session (SIP), un protocole de signalisation H.323, ou un protocole de signalisation de commandes d'appels normalisé.

4. Elément de routage de messages de signalisation de réseau (300) selon la revendication 1, dans lequel la première suite de protocoles de transport inclut le sous-système de transfert de messages (MTP) du protocole SS7, le protocole de contrôle de transmission/protocole Internet (TCP/IP), ou le protocole de transmission de contrôle de flux (SCTP/IP).

5. Elément de routage de messages de signalisation de réseau (300) selon la revendication 1, dans lequel la deuxième suite de protocoles de transport inclut le sous-système de transfert de messages (MTP) du protocole SS7, le protocole de contrôle de transmission/protocole Internet (TCP/IP), ou le protocole de transmission de contrôle de flux (SCTP/IP).

6. Elément de routage de messages de signalisation de réseau (300) selon la revendication 1 incluant un sous-système de comptabilisation de messages (380, 400) pour produire et maintenir des mesures d'utilisation et des informations de facturation associées aux messages qui sont traités et routés par l'élément de routage.

7. Elément de routage de messages de signalisation de réseau (300) selon la revendication 6 dans lequel le sous-système de comptabilisation de messages (380, 400) est situé à l'intérieur de l'élément de routage de messages de signalisation de réseau (300).

8. Elément de routage de messages de signalisation de réseau (300) selon la revendication 6 dans lequel le sous-système de comptabilisation de messages (380, 400) inclut une plate-forme de base de données (400) externe à l'élément de routage de messages de signalisation (300).

9. Elément de routage de messages de signalisation de réseau (300) selon la revendication 8 dans lequel la plate-forme de base de données externe (400) est connectée à l'élément de routage de réseau (300) par l'intermédiaire d'une liaison Ethernet à haut débit.

10. Elément de routage de messages de signalisation de réseau (300) selon la revendication 1 dans lequel la base de données de routage multiprotocole (MRD) contient des instructions de traitement du sous-système de comptabilisation de messages (380, 400).

11. Elément de routage de messages de signalisation de réseau (300) selon la revendication 6 dans lequel le sous-système de comptabilisation de messages (380, 400) est configuré pour recevoir une copie du premier message.

12. Elément de routage de messages de signalisation de réseau (300) selon la revendication 6 dans lequel le sous-système de facturation de messages (380, 400) est configuré pour recevoir un message Message de Comptabilisation Normalisé (NAM) qui est basé sur l'information contenue dans le premier message.

13. Elément de routage de messages de signalisation de réseau (300) selon la revendication 1 dans lequel l'information de traduction de protocole de la base de données de routage multiprotocole (MRD) contient des instructions de traduction de protocole de signalisation.

14. Elément de routage de messages de signalisation de réseau (300) selon la revendication 1 dans lequel la base de données de routage multiprotocole (MRD) est indexée par des valeurs d'hôtes et de ports IP, des valeurs de connecteurs réseaux, des codes de points, ou des valeurs d'adresses d'appelés.

15. Elément de routage de messages de signalisation de réseau (300) selon la revendication 14 dans lequel les valeurs d'adresses d'appelés contiennent des numéros de téléphone, des noms de domaines, ou des adresses d'emails.

16. Procédé de fonctionnement en tant que traducteur de protocole de points de transfert de signaux et messages de signalisation multiprotocole pour effectuer le routage de messages de signalisation entre des réseaux de communication (500, 502) avec différents protocoles de signalisation et différentes suites de protocoles de transport, le procédé consistant à :
(a) recevoir, au niveau d'un premier module de communication (310), à partir d'un premier réseau de communication (500) qui utilise une première suite de protocoles de transport, un premier message de signalisation formaté selon un premier protocole de signalisation ;
(b) déterminer où effectuer le routage du premier message de signalisation ;
(c) déterminer si le premier message de signalisation requiert la traduction d'un protocole de signalisation ;
(d) en réponse à la détermination du fait que le premier message de signalisation requiert la traduction d'un protocole de signalisation, effectuer le routage du premier message de signalisation vers un module de traduction de protocole de signalisation (330, 332, 334, 336, 338) situé sur le premier module de communication (310), sur la base d'une information extraite d'une base de données de routage multiprotocole (MRD) (328) située sur le premier module de communication (310), pour la traduction en un premier message de signalisation équivalent formaté dans un deuxième protocole de signalisation ;
(e) effectuer le routage, au moyen d'un module de routage (HMRT) (342), du premier message de signalisation équivalent formaté dans le deuxième protocole de signalisation à partir du premier module de communication (310) vers un deuxième module de communication (350), et, au niveau du deuxième module de communication (350) :
(i) appliquer une deuxième suite de protocoles de transport et des instructions de routage associées au premier message de signalisation équivalent ; et
(ii) transmettre le premier message de signalisation équivalent dans un deuxième réseau de communication (502).

17. Procédé selon la revendication 16 dans lequel le premier protocole de signalisation est un protocole de signalisation de système de signalisation 7 (SS7), un protocole de signalisation de protocole d'initiation de session (SIP), un protocole de signalisation H.323, ou un protocole de signalisation de protocole de commandes d'appels normalisé (NCCP).

18. Procédé selon la revendication 16 dans lequel le deuxième protocole de signalisation est un protocole de signalisation SS7, un protocole de signalisation de protocole d'initiation de session (SIP), un protocole de signalisation H.323, ou un protocole de signalisation de protocole de commandes d'appels normalisé (NCCP).

19. Procédé selon la revendication 16 dans lequel la première suite de protocoles de transport inclut le sous-système de transfert de messages (MTP) du protocole de signalisation SS7, le protocole de contrôle de transmission/protocole Internet (TCP/IP), ou le protocole de transmission de contrôle de flux/protocole Internet (SCTP/IP).

20. Procédé selon la revendication 16 dans lequel la deuxième suite de protocoles de transport inclut le sous-système de transfert de messages (MTP) du protocole SS7, le protocole de contrôle de transmission/protocole Internet (TCP/IP), ou le protocole de transmission de contrôle de flux/protocole Internet (SCTP/IP).

21. Procédé selon la revendication 16 dans lequel le fait de déterminer où effectuer le routage du premier message de signalisation inclut l'examen de règles de routage qui sont stockées dans une base de données de routage multiprotocole (MRD).

22. Procédé selon la revendication 16 dans lequel le fait de déterminer si le premier message de signalisation requiert la traduction d'un protocole de signalisation inclut des règles de traduction de protocole de signalisation qui sont stockées dans une base de données de routage multiprotocole (MRD).

23. Procédé selon la revendication 16 comprenant le fait de déterminer si un service de comptabilisation de messages est requis.

24. Procédé selon la revendication 23 comprenant, en réponse à la détermination du fait qu'un service de comptabilisation de messages est requis, l'envoi d'un message de comptabilisation à un sous-système de comptabilisation de messages (380, 400).

25. Procédé selon la revendication 24 dans lequel le message de comptabilisation est une copie du premier message.

26. Procédé selon la revendication 24 dans lequel le message de comptabilisation est un message Message de Comptabilisation Normalisé (NAM) basé sur une information contenue dans un premier message.

27. Procédé selon la revendication 23 dans lequel le fait de déterminer si un service de comptabilisation de messages est requis inclut l'examen de règles de service de comptabilisation de messages stockées dans une base de données de routage multiprotocole (MRD).

28. Procédé selon la revendication 16 dans lequel l'application de la deuxième suite de protocoles de transport inclut l'application de la deuxième suite de protocoles de transport à un module d'interface de liaison multiprotocole de sortie (MLIM).

29. Produit programme d'ordinateur pour commander un ou plusieurs modules de traitement destinés à fonctionner en tant que traducteur de protocole de points de transfert de signaux et messages de signalisation multiprotocole pour effectuer le routage de messages de signalisation entre des réseaux de communication (500, 502) avec différents protocoles de signalisation et différents protocoles de transport, le produit programme d'ordinateur comprenant des instructions exécutables par ordinateur incorporées dans un support qui peut être lu par un ordinateur pour effectuer des étapes consistant à :
(a) recevoir, au niveau d'un premier module de communication (310), à partir d'un premier réseau de communication (500) qui utilise une première suite de protocoles de transport, un premier message de signalisation formaté selon un premier protocole de signalisation ;
(b) déterminer où effectuer le routage du premier message de signalisation ;
(c) déterminer si le premier message de signalisation requiert la traduction d'un protocole de signalisation ;
(d) en réponse à la détermination du fait que le premier message de signalisation requiert la traduction d'un protocole de signalisation, effectuer le routage du premier message de signalisation vers un module de traduction de protocole de signalisation (330, 332, 334, 336, 338) situé sur le premier module de communication (310), sur la base d'une information extraite d'une base de données de routage multiprotocole (MRD) (328) située sur le premier module de communication (310), pour la traduction en un premier message de signalisation équivalent formaté dans un deuxième protocole de signalisation ;
(e) effectuer le routage, au moyen d'un module de routage (HMRT) (342), du premier message de signalisation équivalent formaté dans le deuxième protocole de signalisation à partir du premier module de communication (310) vers un deuxième module de communication (350), et, au niveau du deuxième module de communication (350) :
(i) appliquer une deuxième suite de protocoles de transport et des instructions de routage associées au premier message de signalisation équivalent ; et
(ii) transmettre le premier message de signalisation équivalent dans un deuxième réseau de communication (502).

30. Produit programme d'ordinateur selon la revendication 29, dans lequel l'exécution d'une recherche dans la base de données de routage multiprotocole (MRD) inclut le fait de déterminer si une comptabilisation est requise pour le premier message de signalisation.

31. Produit programme d'ordinateur selon la revendication 30 comprenant, en réponse à la détermination du fait qu'une comptabilisation est requise pour le premier message de signalisation, la formulation d'un message de comptabilisation normalisé basé sur les instructions de comptabilisation.

32. Produit programme d'ordinateur selon la revendication 31 comprenant le routage du message de comptabilisation normalisé vers un sous-système de comptabilisation de messages (380, 400).

33. Produit programme d'ordinateur selon la revendication 29 dans lequel l'exécution d'une recherche dans la base de données de routage multiprotocole (MRD) inclut l'exécution de la recherche en utilisant un code de point contenu dans le premier message de signalisation.

34. Produit programme d'ordinateur selon la revendication 29 dans lequel l'exécution d'une recherche dans la base de données de routage multiprotocole (MRD) inclut l'exécution de la recherche en utilisant une adresse d'appelé contenue dans le premier message de signalisation.

35. Produit programme d'ordinateur selon la revendication 29 dans lequel l'exécution d'une recherche dans la base de données de routage multiprotocole (MRD) inclut l'exécution de la recherche en utilisant une adresse IP contenue dans le premier message de signalisation.

36. Produit programme d'ordinateur selon la revendication 29 dans lequel l'exécution d'une recherche dans la base de données de routage multiprotocole (MRD) inclut l'exécution de la recherche en utilisant un nom de domaine contenu dans le premier message de signalisation.
